Europäisches Patentamt

European Patent Office

Office européen des brevets

(19)

(11) Publication number: **0 051 085**
**B1**

(12) **EUROPEAN PATENT SPECIFICATION**

(45) Date of publication of patent specification: **14.05.86**

(51) Int. Cl.⁴: **G 01 C 19/18**

(21) Application number: **80106811.5**

(22) Date of filing: **05.11.80**

(54) **Two-degree-of-freedom gyroscope.**

(43) Date of publication of application:
**12.05.82 Bulletin 82/19**

(45) Publication of the grant of the patent:
**14.05.86 Bulletin 86/20**

(84) Designated Contracting States:
**DE FR GB**

(56) References cited:
**DE-A-1 623 589**
**DE-A-2 627 852**
**FR-A-1 082 038**
**US-A-3 529 477**
**US-A-3 540 293**
**US-A-3 630 091**

(73) Proprietor: **Rockwell International Corporation**
**2230 East Imperial Highway**
**El Segundo, California 90245 (US)**

(72) Inventor: **Noar, Raymond**
**9940 Belfair Street**
**Bellflower California 90706 (US)**
Inventor: **Blache, Louis John**
**33072 Mesa Vista Drive**
**Dana Point California 92629 (US)**

(74) Representative: **Wagner, Karl H.**
**WAGNER & GEYER Patentanwälte**
**Gewuerzmuehlstrasse 5 Postfach 246**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to two-degree-of-freedom gyroscopes and more particularly pertains to a two-degree-of-freedom gyroscope in which the rotor is elastically suspended from a wire held taut within a drive shaft for the rotor and wherein the rotor is radially supported by magnetic repulsion.

Most of the two-degree-of-freedom displacement gyroscopes which are presently in use are of two types: the free-rotor type of gyroscope and the dry-tuned type of gyroscope. In the free-rotor type of gryroscope, the rotor is supported on a spherical electrostatic bearing or on a spherical autolubricated gas bearing. In the dry-tuned type of gyroscope, the rotor is supported on a mechanical spring or flexure system which must be precisely tuned to resonate at the spin frequency. Both of these types of displacement gyroscopes are fabricated from costly precision-machined parts. In addition, it is critical to their proper operation that a very high degree of skill and care be exercised in their assembly and in their adjustment for balance. The result is that the cost of these presently available displacement gyroscopes is a major portion of the cost of an entire inertial navigation system.

There is a need, therefore, to provide a less costly two-degree-of-freedom displacement gyroscope which requires less precision, skill and care in its fabrication, assembly and adjustment. It is an object of the invention described herein to meet these requirements.

Most of the rate gyroscopes which are presently in use are of the single-degree-of-freedom type. The rotor is mounted on a gimbal, which, in the higher precision versions, is a sealed float immersed in a fluid contained within an outer housing. These gyroscopes have a relatively large number of component parts and are therefore expensive to make. As additional consideration, inertial navigation systems which employ single-degree-of-freedom rate gyroscopes require the use of more of them than would ordinarily be necessary were a satisfactory two-degree-of-freedom rate gyroscope available. These navigational systems are therefore larger, more complex and more costly to produce than they would be if they used two-degree-of-freedom rate gyroscopes.

Therefore, there is also a need for a two-degree-of-freedom rate gyroscope which is made up of comparatively fewer parts. It is another object of this invention to meet this requirement.

US—A—3,540,293 relates to an example of a gyroscope of the type set forth in the pre-characterizing part of claim 1. Also, US—A—3,434,084 relates to a repulsion type of suspension which may be used for gyroscopes. However, mechanical contact bearings, for example, a graphite bearing is used.

An object of this invention is to provide a gyroscope having a two-degree-of-freedom suspension for the gyroscope rotor.

Another object of the invention is to provide a two-degree-of-freedom gyroscope which is comparatively easy and inexpensive to fabricate from relatively few parts.

Still another object of the invention is to provide a two-degree-of-freedom gyroscope which is comparatively easy and inexpensive to assemble and adjust.

According to the present invention, these and other objects are attained in a gyroscope, comprising: a shaft mounted for rotation about a central shaft axis, a wire mounted on and held taut by said shaft for rotation therewith, wherein said wire is directed along said central shaft axis, a substantially cylindrical rotor having a center of rotation, wherein said rotor is attached to and suspended from said wire at said center of rotation, and means for centering said rotor and for restraining radial displacement of said rotor, said gyroscope being characterized in that said means for centering and for restraining said rotor comprises magnet means mounted for rotation about said central shaft axis on said shaft and on said rotor, whereby there is formed a frictionless universal joint for said rotor, wherein said joint is operable at any arbitrary orientation relative to gravity, said joint permitting rotation of said rotor about any axis perpendicular to said central shaft axis while restraining axial and radial displacement of said rotor.

Precisely dimensioned wire for use in practicing the invention is abundantly available at relatively low cost. Furthermore, the magnetic parts used do not require high precision machining to tight tolerances. The parts required for the rotor suspension are comparatively few in number. For all of these reasons, a gyroscope in accordance with the invention is relatively inexpensive to produce. In addition, a gyroscope in accordance with the invention may be manufactured in embodiments which are both highly rugged and yet small in size.

FIG. 1 is an elevation view, partly in cross-section, of a drive shaft and rotor for a two-degree-of-freedom rate gyroscope in accord with the invention.

FIG. 2 is a cross-section view of the rotor and shaft shown in FIG. 1 taken along the line 2—2.

FIG. 3 is a cross-section view of the rotor and shaft shown in FIG. 1 taken along the line 3—3.

FIG. 4 is an elevation view, partly in cross-section, of a drive shaft and rotor for a two-degree-of-freedom displacement gyroscope in accord with the invention.

FIG. 5 is a graph depicting the variation of restoring torque with rotor deflection in a displacement gyroscope according to the invention.

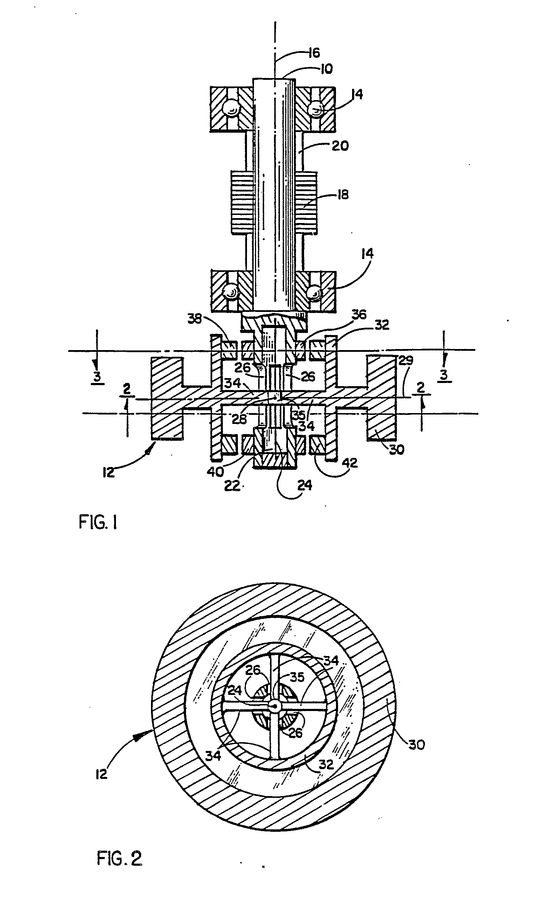

In FIG. 1 there is shown a shaft 10 for driving and supporting a gyroscope rotor 12. The rotor 12 is formed as a substantially cylindrical flywheel. The shaft 10 is mounted by means of bearings 14 for rotation relative to a housing (not shown). Torque for spinning the shaft 10 and rotor 12 about a central shaft axis 16 is provided by a suitable electrical spin motor. That portion of the spin motor which is fixed to the shaft 10 is represented in FIG. 1 by laminations 18 of magnetizable material axially located by spacers 20.

A cavity 22 is formed in the shaft 10 in the region thereof adjacent to the place where the rotor 12 is disposed. An axial suspension wire 24 directed along and coincident with the central shaft axis 16 is mounted on the shaft 10 and is held in tension thereby in the shaft cavity 22. Slotted openings 26 in the shaft wall permit communication between the exterior of the shaft 10 and the cavity 22 in the interior thereof.

The center of rotation 28 of the rotor 12 is at the point where the rotor center plane 29 is intersected by the rotor axis of symmetry. The rotor 12 is fabricated to have an outer rim 30 and an inner cylindrical flange 32 position closer to the shaft 10.

As shown in cross-section in FIG. 2, the inner portion of the rotor 12 is formed as a spider or spoked wheel having a plurality of arms 34 radiating outward from the central rotor axis and center of rotation 28 to the inner rotor flange 32. The rotor arms 34 emerge from the interior of the shaft 10 through the slots 26.

At their innermost extensions, the rotor arms 34 are attached to the axial suspension wire 24. The attachment may be accomplished, for example, by swaging a small flange 35 to the wire 24 and then clamping the rotor arms 34 to the flange 35. This elastic suspension of the rotor 12 permits limited, frictionless rotation of the rotor 12 about any axis perpendicular to the central shaft axis 16 by elastic deformation of the wire 24. However, the axial suspension wire 24 restrains axial displacement of the rotor 12, i.e., displacement along the central shaft axis 16.

Referring back to FIG. 1, a magnetic bearing is provided for radially supporting and restraining the rotor 12 to keep it centered with respect to the shaft 10 at any orientation of the shaft 10 relative to gravity. To accomplish this, a ring 36 of magnetized material is mounted on, and preferably attached to, the shaft 10 at a selected distance to one side of the center plan 29 of the rotor 12. Ring 36 is nested within and concentric with a second ring 38 of magnetized material mounted on, and preferably attached to, the inner flange 32 of the rotor 12. Rings 36 and 38 are suitably spaced apart from each other by a narrow gap. The outer surface of the shaft ring 36 and the adjacent inner surface of the rotor ring 38 preferably each have an unvarying polarity of magnetization around their periphery. In addition, the outer surface of the shaft ring 36 has the same polarity of magnetization as the adjacent inner surface of the rotor ring 38. As a result, these two magnets act on each other in repulsion to keep the rotor 12 centered on the shaft 10.

The magnetic bearing for the gyroscope of FIG. 1 further includes a second pair of nested, concentric rings 40 and 42 similar to rings 36 and 38, respectively. Rings 40 and 42 are mounted on, and preferably attached to, the shaft 10 and rotor 12, respectively, at the same selected distance from the center plan 29 as the rings 36 and 38. Rings 40 and 42 act on each other in repulsion to keep the rotor 12 centered on the shaft 10 in the same manner as the rings 36 and 38, as discussed above. However, since the pair of rings 36 and 38 is disposed to one side of rotor center plan 29 and the pair of rings 40 and 42 is disposed on the opposite side of rotor center plane 29, their magnetic repulsion operates as well to resist rotation of the rotor 12 about any axis perpendicular to the control shaft axis 16. The resistance to this rotation increases as the angular deflection about such an axis increases due to the torque generated by the increased radial force in the region of decreased radial gap between either magnets 36 and 38 or 40 and 42, depending on the direction of the rotation. This resistance by magnetic repulsion is analogous to the resistance to rotation of the gimbal supporting the rotor offered by mechanical springs in more conventional rate gyros. The torque produced by the magnetic bearing, which comprises rings 36, 38, 40 and 42, preferably varies linearly with angular deflection in the range of interest. In other words, the magnetic bearing is preferably designed to have a spring rate which is constant. Furthermore, in the preferred embodiment, the rings, 36, 38, 40 and 42 are preferably permanent magnets of a material which may be readily shaped to provide such a constant spring rate.

The magnetic bearing described herein may be fabricated relatively easily and inexpensively inasmuch as tolerances for the dimensions of the rings 36, 38, 40 and 42 may be relatively liberal. Tolerances in the range from about 0.1 to 0.5 mil are expected to be adequate for these magnetic parts. On the other hand, precision-machined parts in prior-art gyros are frequently required to conform to much tigher tolerances which are in the range of tens of micro-inches.

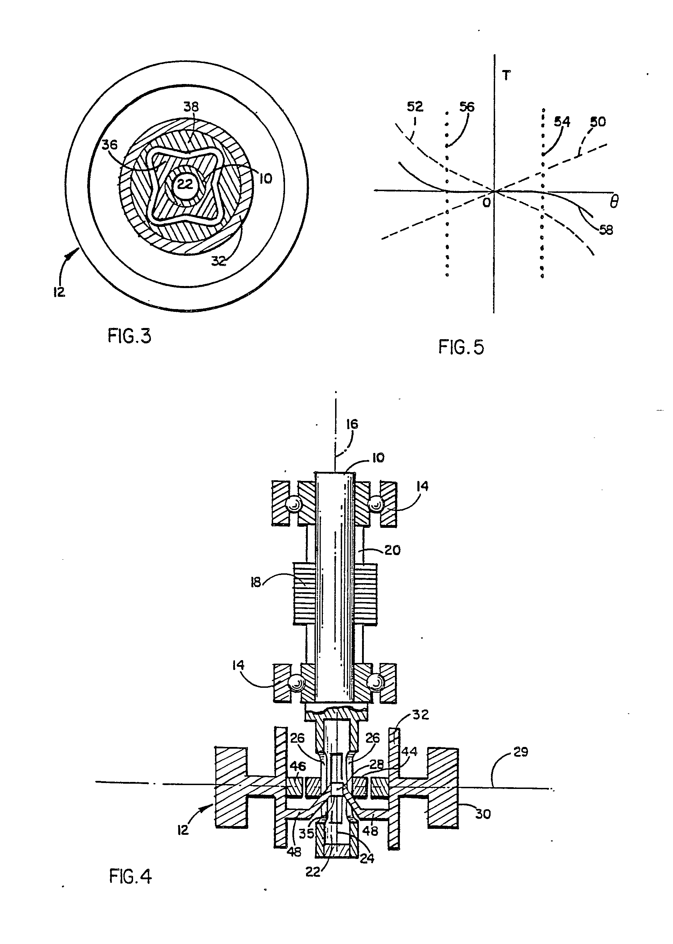

In FIG. 3, a preferred approach for shaping the end view cross-section of magnetic rings 36 and 38 is shown. The adjacent surfaces of rings 36 and 38 are shaped to follow a conforming, undulating contour. The lobes thus formed on the adjacent surfaces of each of rings 36 and 38 project into corresponding recesses formed on the other ring. The result is that axial torque is transmitted from the drive shaft 10 to the rotor 12 by magnetic repulsion. This feature provides the advantage of preventing mechanical contact between the rotor arms 34 and the shaft 10 when the rotor 12 is at operating speed. If such mechanical contact were permitted to occur, the undesirable frictional effects resulting would degrade the performance of the gyroscope. On the other hand, contact between the rotor arms 34 and the shaft 10 may occur without causing any problem while the gyroscope is being brought up to speed or being shut down.

The adjacent surfaces of magnetic rings 40 and 42 are conformed to each other in the same undulated, lobed pattern as is provided for rings 36 and 38 for the same reasons.

As an alternative approach, not shown in the drawing, a magnetic bearing for the rate gyroscope of FIG. 1 may be fabricated using cylindrical permanent magnets mounted on the shaft 10 and inner rotor flange 32 where the cylindrical permanent magnets are axially polarized. Such magnets would be used in conjunction with end pieces of high permeability material for directing the magnetic flux in the radial direction. The magnets and end pieces would replace magnetic rings 36, 38, 40 and 42. The end pieces would preferably be given the same lobed shape as is shown for the rings 36 and 38 in FIG. 3.

The two-degree-of-freedom displacement gyroscope of FIG. 4 is, in most respects, similar to the rate gyroscope of FIG. 1. As discussed above, the rotor 12 is elastically suspended from and axially restrained by a wire 24 held taut within a cavity 22 in the rotor drive shaft 10. The wire 24 is directed along the central shaft axis 16.

As in the case of the rate gyroscope of FIG. 1, radial restraint and centering of the rotor 12 for the displacement gyroscope of FIG. 4 is provided by a magnetic bearing acting in repulsion. However, only two nested, concentric magnetic rings 44 and 46 are required. The ring 44 is mounted on the shaft 10 and the ring 46 is mounted on the rotor 12 at the center plane 29 of the rotor. As in any displacement gyroscope, the object here is to eliminate or nullify any uncontrolled torque tending to cause or restrain rotation about any axis perpendicular to the central shaft axis 16. The positioning of the rings 44 and 46 at the rotor center plane 29 tends to accomplish this since the magnetic repulsion between them tends to cause such rotation while the attendant elastic deformation of the wire 24 with such rotation tends to restrain it.

The arms 48 of the spider by which the rotor 12 is attached to the wire 24 are formed to provide an attachment thereto without interfering with the positioning of the magnetic rings 44 and 46.

Except for their positioning, the magnetic rings 44 and 46 are preferably fabricated and mounted in the same manner as magnetic rings 36, 38, 40 and 42 as discussed above in connection with FIGs. 1, 2 and 3.

Additional considerations for the fabrication of the magnetic rings 44 and 46 for the preferred embodiment displacement gyroscope are illustrated in FIG. 5. θ, the angular deflection between the rotor spin axis and the central shaft axis 16, is plotted along the abscissa. T, the coupling torque acting on the rotor 12 perpendicular to its spin axis, is plotted along the ordinate. Dashed line 50 shows the linear variation of coupling restoring torque produced by the axial suspension wire 24. This component of torque tends to restrain angular deflection. The variation is representative of the positive spring rate of the elastic suspension. On the other hand, the magnetic suspension has a negative spring rate. That is to say, the magnetic forces tend to induce angular deflection of the rotor spin axis away from angular coincidence with the central shaft axis 16. This effect of the magnetic suspension is represented by dashed curve 52.

As a design goal, the characteristic 52 for the negative coupling torque produced by the magnetic suspension preferably has a substantially linear variation over a suitably wide region centered on the ordinate as, for example, the region between dotted vertical lines 54 and 56. In addition, it is a design goal that the slope of curve 52 in this region be equal in magnitude, albeit opposite in sign, to the slope of the characteristic curve 50 for the restoring torque provided by the wire 24. When these design goals are met, the torques of the elastic and magnetic suspensions nullify each other in the region between lines 54 and 56. This result is illustrated in the characteristic curve 58 representing the composite coupling torque acting on the rotor 12 perpendicular to its spin axis. Curve 58 is made as close as possible to zero for a substantial range of angular deflections. This is the desired situation for a low-drift displacement gyroscope.

Of course, controlled torques which may be applied to the rotor 12 by, for example, electromagnetic torquers are in addition to the coupling torques discussed hereinabove.

Inasmuch as the radial centering function for the rotor 12 is provided by the magnetic suspension, the wire 24 is required to provide only axial restraint. Thus, the wire 24 may be very thin. A thin wire has a very low cross-axis spring rate. Because of the low spring rate of the wire, only a similarly low negative spring rate will be required of the magnetic bearing for cancellation of the negative and positive coupling torques as discussed above. As is well known, cancellation of such quantities is more readily accomplished when the quantities are small. The combined use of a wire for axial support and a magnetic bearing for radial support of the rotor 12 thus readily provides the very low levels of cross-axis coupling required in a high performance displacement gyroscope.

While the invention has been described in its preferred embodiments, it will be understood that the words which have been used are words of description rather than of limitation and that changes within the purview of the appended claims may be made without departing from the true scope and spirit of the invention in its broader aspects.

**Claims**

1. A gyroscope, comprising:
a shaft (10) mounted for rotation about a central shaft axis (16);
a wire (24) mounted on and held taut by said shaft (10) for rotation therewith, wherein said wire is directed along said central shaft axis (16);
a substantially cylindrical rotor (12) having a center of rotation (28), wherein said rotor (12) is attached to and suspended from said wire (24) at said center of rotation (28); and

means for centering said rotor (12) and for restraining radial displacement of said rotor (12);

characterized in that said means for centering and for restraining said rotor comprises magnet means (36, 38, 40, 42; 44, 46) mounted for rotation about said central shaft axis (16) on said shaft (10) and on said rotor (12).

2. A gyroscope as recited in Claim 1, wherein said wire (24) is disposed in a cavity (22) in said shaft (10),

wherein said shaft (10) has openings (26) therein communicating with said cavity, and

wherein said rotor is formed as a spider having arms (34, 48) radiating outward from said wire and through said shaft openings to the remainder of said rotor disposed exterior to said shaft.

3. A gyroscope as recited in Claim 1 or 2, wherein said magnet means comprises:

a first ring (40; 44) of magnetized material mounted on the outer surface of said shaft and concentric therewith; and

a second ring (42; 46) of magnetized material, mounted on an inner surface of said rotor adjacent to and surrounding said first ring, wherein the adjacent surfaces of said first and second rings have the same magnetic polarity, whereby said first and second rings center and radially support said rotor by magnetic repulsion.

4. A gyroscope as recited in Claim 3, wherein the adjacent surfaces of said first and second rings of magnetized material are conformed to each other in an undulating lobed pattern, whereby axial torque is transmitted magnetically between said shaft and said rotor.

5. A gyroscope as recited in Claim 3 or 4; wherein said first and second rings of magnetized material are positioned to lie in the center plane of said rotor, and

wherein force due to magnetic repulsion acting to cause rotation of said rotor about an axis perpendicular to said central shaft axis (16) is counterbalanced by force due to restraint by said wire acting to prevent such rotation,

whereby enabling said gyroscope to function as a displacement gyroscope having two degrees of freedom.

6. A gyroscope as recited in Claim 3, wherein said first and second rings (44, 46) of magnetized material are positioned on said shaft and said rotor, respectively, a selected distance to one side of the center plane (29) of said rotor, and

wherein said magnet means further comprises third and fourth rings of magnetized material substantially the same as said first and second rings and similarly mounted on said shaft and rotor, respectively, said selected distance to the other side of the center plane of said rotor,

whereby rotation of said rotor about any axis perpendicular to said central shaft axis is restrained by a torque proportional to the angular displacement of such rotation thereby enabling said gyroscope to function as a rate gyroscope having two degrees of freedom.

## Revendications

1. Gyroscope, comprenant:

un arbre (10) monté afin qu'il tourne autour d'un axe central (16),

un fil métallique (24) monté sur l'arbre (10) et maintenu tendu par celui-ci afin qu'il tourne avec lui, le fil métallique étant dirigé suivant l'axe central (16) de l'arbre,

un rotor sensiblement cylindrique (12) ayant un centre de rotation (28), le rotor (12) étant fixé au fil métallique (24) et étant suspendu à celui-ci au centre de rotation (28), et

un dispositif de centrage du rotor (12) et de retenue s'opposant au déplacement radial du rotor (12),

caractérisé en ce que le dispositif de centrage et de retenue du rotor comporte un dispositif à aimants (36, 38, 40, 42; 44, 46) monté afin qu'il tourne autour de l'axe central (16) de l'arbre, sur l'arbre (10) et sur le rotor (12).

2. Gyroscope selon la revendication 1, dans lequel le fil métallique (24) est disposé dans une cavité (22) formée dans l'arbre (10),

dans lequel l'arbre (10) a des ouvertures (26) communiquant avec la cavité, et

dans lequel le rotor est sous forme d'un croisillon ayant des bras (34, 48) qui sont dirigés radialement vers l'extérieur à partir du fil métallique et passent par les ouvertures de l'arbre vers le reste du rotor placé à l'extérieur du l'arbre.

3. Gyroscope selon l'une des revendications 1 et 2, dans lequel le dispositif à aimants comprend:

un premier anneau (40; 44) d'un matériau aimanté monté à la surface externe de l'arbre et concentrique à celui-ci, et

un second anneau (42; 46) d'un matériau aimanté, monté à la surface interne du rotor à proximité du premier anneau et entourant celui-ci, les surfaces adjacentes du premier et du second anneau ayant la même polarité magnétique si bien que le premier et le second anneau centrent et supportent radialement le rotor par des forces de répulsion magnétique.

4. Gyroscope selon la revendication 3, dans lequel les surfaces adjacentes du premier et du second anneau d'un matériau aimanté ont des configurations correspondant à un dessin ondulé à lobes, si bien que le couple axial est transmis magnétiquement entre l'arbre et le rotor.

5. Gyroscope selon l'une des revendications 3 et 4,

dans lequel le premier et le second anneau d'un matériau aimanté sont disposés afin qu'ils se trouvent dans le plan central du rotor, et

dans lequel la force due à la répulsion magnétique agissant de manière qu'une rotation du rotor autour d'un axe perpendiculaire à l'axe central (16) de l'arbre soit provoquée, est compensée par la force due à la retenue par le fil métallique qui agit en empêchant cette rotation,

si bien que le rotor peut fonctionner comme un gyroscope à déplacement ayant deux degrés de liberté.

6. Gyroscope selon la revendication 3,

dans lequel le premier et le second anneau (44, 46) d'un matériau aimanté sont disposés sur l'arbre et le rotor respectivement à une distance choisie d'un premier côté du plan central (29) du rotor, et

dans lequel le dispositif à aimants comprend en outre un troisième et un quatrième anneau d'un matériau aimanté, sensiblement identiques au premier et au second anneau et montés de manière analogue sur l'arbre et le rotor respectivement, à la distance choisie de l'autre côté du plan central du rotor,

si bien que la rotation du rotor autour d'un axe perpendiculaire à l'axe central de l'arbre est limitée par un couple proportionnel au déplacement angulaire suivant cette rotation, permettant ainsi au gyroscope de jouer le rôle d'un gyromètre ayant deux degrés de liberté.

## Patentansprüche

1. Ein Gyroskop, welches folgendes aufweist:

eine Welle (10), die drehbar um eine Mittelwellenachse (16) gelagert ist,

ein Draht (24), der an der Welle (10) angeordnet und durch diese zur Drehung mit derselben gespannt gehalten ist, wobei der Draht längs der Mittelwellenachse (16) gerichtet ist,

ein im wesentlichen zylindrischer Rotor (12) mit einem Rotationszentrum (28), wobei der Rotor (12) am Rotationszentrum (28) am Draht (24) befestigt ist und von diesem herabhängt, und

Mittel zum Zentrieren des Rotors (12) und zur Einschränkung der Radialversetzung des Rotors (12),

dadurch gekennzeichnet, daß die Mittel zur Zentrierung und zur Einschränkung des Rotors Magnetmittel (36, 38, 40, 42; 44, 46) aufweisen, und zwar angeordnet zur Drehung um die Mittelwellenachse (16) an der Welle (10) und an dem Rotor (12).

2. Gyroskop nach Anspruch 1, wobei der Draht (24) in einem Hohlraum (22) in der Welle (10) angeordnet ist, wobei die Welle (10) Öffnungen (26) darinnen aufweist, die mit dem Hohlraum in Verbindung stehen, und wobei der Rotor als eine Spinne ausgebildet ist mit Armen (34, 48), die von dem Draht strahlförmig nach außen verlaufen und durch die erwähnten Wellenöffnungen zum Rest des außerhalb der Welle angeordneten Rotors.

3. Gyroskop nach Anspruch 1 oder 2, wobei die Magnetmittel folgendes aufweisen:

einen ersten Ring (40; 44) aus magnetisiertem Material angeordnet an der Außenoberfläche der Welle und konzentrisch damit, und

einen zweiten Ring (42; 46) aus magnetisiertem Material befestigt an einer Innenoberfläche des Rotors benachbart zu dem erwähnten ersten Ring und diesen umgebend, wobei die benachbarten Oberflächen der ersten und zweiten Ringe die gleiche magnetische Polarität aufweisen, wodurch die ersten und zweiten Ringe den Rotor durch magnetische Abstoßung zentrieren und radial tragen.

4. Gyroskop nach Anspruch 3, wobei die benachbarten Oberflächen der ersten und zweiten Ringe aus magnetisiertem Material aneinander in einem gewellten, mit Nasen versehenen Muster angepaßt sind, wodurch das Axialdrehmoment magnetisch zwischen der Welle und dem Rotor übertragen wird.

5. Gyroskop nach Anspruch 3 oder 4, wobei die ersten und zweiten Ringe aus magnetisiertem Material derart positioniert sind, daß sie in der Mittelebene des Rotors liegen, und wobei die auf die magnetische Abstoßung zurückgehende Kraft, die die Drehung des Rotors um eine Achse senkrecht zur Mittelwellenachse (16) bewirkt, gegenausgeglichen wird durch die Kraft infolge der Einschränkung durch den Draht, der wirkt, um diese Drehung zu verhindern, wodurch das Gyroskop in die Lage versetzt wird, als ein Versetzungsgyroskop mit zwei Freiheitsgraden zu arbeiten.

6. Gyroskop nach Anspruch 3, wobei die ersten und zweiten Ringe (44, 46) aus magnetisiertem Material auf der Welle bzw. dem Rotor positioniert sind, und zwar mit einem ausgewählten Abstand gegenüber einer Seite der Mittelebene (29) des Rotors, und wobei die Magnetmittel ferner dritte und vierte Ringe aus magnetisiertem Material aufweisen, und zwar im wesentlichen gleich den ersten und zweiten Ringen und in gleicher Weise an der Welle bzw. dem Rotor angeordnet, und zwar mit dem gewählten Abstand zur anderen Seite der Mittelebene des Rotors, wodurch die Drehung des Rotors um irgendeine Achse senkrecht zur Mittelwellenachse durch ein Drehmoment eingeschränkt wird, welches proportional zur Winkelversetzung dieser Drehung ist, wodurch das Gyroskop in die Lage versetzt wird, als ein Raten-(Geschwindig-keits)gyroskop mit zwei Freiheitsgraden zu arbeiten.

FIG. 1

FIG. 2

1

FIG.3

FIG.5

FIG.4